# EUROPÄISCHE PATENTSCHRIFT

(11) **EP 1 212 538 B1**
(45) Veröffentlichungstag und Bekanntmachung des Hinweises auf die Patenterteilung: **04.08.2004**
(21) Anmeldenummer: 00965976.4
(22) Anmeldetag: 12.09.2000
(51) Int. Cl.: F16B 13/14

(54) **VERFAHREN UND MITTEL ZUM VERANKERN VON SCHRAUBEN**
METHOD AND DEVICE FOR FASTENING SCREWS
PROCEDE ET SYSTEME PERMETTANT D'ANCRER DES VIS

(30) Priorität: 14.09.1999 DE 19943962
(43) Veröffentlichungstag der Anmeldung: 12.06.2002
(73) Patentinhaber: MARMORIT GmbH, 79283 Bollschweil (DE)
(72) Erfinder: OPFERKUCH, Roland, 79189 Bad Krozingen (DE)
(74) Vertreter: Werner, Hans-Karsten, Dr.Dipl.-Chem.
(86) Internationale Anmeldenummer: PCT/EP2000/008892
(87) Internationale Veröffentlichungsnummer: WO 2001/020175

(56) Entgegenhaltungen:
- EP-A- 0 867 624
- FR-A- 2 545 555
- FR-A- 2 687 706
- US-A- 5 466 086

## Beschreibung

Gegenstand der vorliegenden Erfindung ist ein Verfahren zum Verankern von Schrauben mit Durchmessern zwischen 20 und 30 mm mit steilem Gewinde und einem Schraubenschaft ohne Gewinde, insbesondere von Schwellenschrauben in einem Bohrloch mit Hilfe eines Klebers und verspannenden festen Teilchen sowie Mittel zur Durchführung des Verfahrens sowie die Verwendung der Mittel zum Verankern.

Ein gattungsgemäßes Verfahren ist beschrieben in der DE-AS-1 948 339, bei welchem als verspannende feste Teilchen eine Einlage, vorzugsweise aus Eisen verwendet wird, die derart geformt ist, dass zwischen ihr die Schraube verspannenden Teilen und der Lochwand durchgehende Räume freigehalten werden. Die Figuren 1 und 4 zeigen typische Schwellenschrauben mit einem Schraubenschaft ohne Gewinde. Derartige Schwellenschrauben sind aber auch in weiteren Ausgestaltungen bekannt, bei denen beispielsweise der Schraubenschaft ohne Gewinde länger ausgebildet ist und von einer Spiralfeder umgeben ist.

Aus der US-A-4,198,793 ist bekannt, Schrauben mit einem normalen Gewinde in einem Bohrloch zu befestigen, in dem das Bohrloch deutlich größer ist als der Durchmesser der Schraube und bei welchem das Bohrloch mit einem kugelförmigen Material und einem aushärtenden Harz gefüllt wird. Das kugelförmige Material besteht dabei aus Keramik oder Glas. Das Verfahren hat sich nicht bewährt, da diese Kugeln sich beim Eindrehen der Schrauben nicht verdichten, da sie untereinander einen zu kleinen Verschiebewiderstand besitzen. Dieser Effekt ist beispielsweise von Kugellagern bekannt. Weiterhin beobachtet man bei derartigem Füllmaterial beim Eindrehen Thixotropie, wodurch die Rückhattekräfte weiter abnehmen und gegebenenfalls sogar das Material aus dem Bohrloch austritt. Dies reduziert vor allem die Sofortfestigkeit der Verankerung in erheblichem Maße bei Verwendung von Stahlkugeln. Es findet auch keine ausreichende Anpassung an die Oberfläche der Bohrwandungen statt. Dadurch verschlechtert sich die Kraftübertragung von der Schraube in den Untergrund.

Wesentlich bessere Ergebnisse werden daher bei dem Verfahren und der Vorrichtung gemäß WO 92/18697 erzielt, bei welchem als verspannende Teilchen hochverschleißfeste Fasern oder Späne aus Metallen, Polymeren und/oder Keramik verwendet werden mit durchschnittlichen Längen kleiner als der halbe Bohrlochdurchmesser. In der Praxis sind hierbei vor allem Metallspäne eingesetzt worden, die jedoch je nach eingesetztem Ausgangsmaterial sowie gegebenenfalls Verunreinigungen, das Abbinden des verwendeten Klebers inhibiert haben. Derartige Metallspäne sind preislich nur vertretbar, wenn sie als Abfallprodukt der metallverarbeitenden Industrie anfallen und für das Verfahren zum Verankern der Schrauben eingesetzt werden. Derartiges Abfallmaterial fällt aber stets in sehr unterschiedlicher Qualität an.

Ein weiterer Nachteil dieser Metallspäne ist, dass hierdurch eine elektrisch leitende Verbindung zwischen der Schraube und der Bohrlochwandung entsteht. Bei modernen Gleisen wird aber verlangt, dass sowohl die Schienen als auch die Schwellenschrauben gegenüber den Betonschwellen elektrisch isoliert sind. Schließlich wird von den Gleisbauern für derartige moderne Schienenstränge verlangt, dass die Schwellenschrauben einerseits sehr rasch eine Mindestfestigkeit aufweisen, danach aber noch einmal justiert werden können, um schließlich nach dem Abbinden des Klebers eine sehr hohe Endfestigkeit aufzuweisen.

Selbstverständlich wird weiterhin verlangt, dass der eingesetzte Kleber in einem weiten Temperaturbereich eine gewisse Elastizität behält, dennoch wärmeformbeständig ist, einen hohen elastischen Widerstand aufweist und gegen Fette, Öle und Lösungsmittel beständig ist, Weiterhin sollen die verwendeten Schrauben im oberen Teil einen Schraubenschaft ohne Gewinde aufweisen. Dies wird gefordert, weil durch das Gewinde die Bruchfestigkeit der Schwellenschrauben geschwächt wird. Es soll daher zumindest der besonders bruchgefährdete Bereich der Schwellenschrauben am oberen Ende des Bohrlochs massiv ausgestaltet sein und kein Gewinde aufweisen.

Die Erfindung hat sich somit die Aufgabe gestellt, ein Verfahren zum Verankern von Schrauben mit Durchmessern zwischen 20 und 30 mm mit steilem Gewinde und einem Schraubenschaft bereich ohne Gewinde, d.h. insbesondere von Schwellenschrauben, in einem Bohrloch zur Verfügung zu stellen, bei welchem mit Hilfe eines Klebers und verspannenden festen Teilchen eine gute Verankerung möglich ist, die alle obengenannten Forderungen erfüllt.

Diese Aufgabe wird jetzt dadurch gelöst, dass der Kleber ein Zwei-Komponentenkleber oder ein nichtschäumender Ein-Komponentenkleber ist und als verspannende feste Teilchen Kunststoffteilchen verwendet werden mit Teilchengrößen, die mindestens zu 90% doppelt so groß sind, wie der durchschnittliche Abstand zwischen Schraubenschaft und Bohrlochwandung und der Kunststoff eine Kugeldruckhärte (10 sec. Wert) nach DIN 53456 von mindestens 100 N/mm² und eine Schlagzähigkeit nach DIN 53453 von mindestens 80 kJ/m² aufweist, eine Warmformbeständigkeit bis mindestens 80°C, eine Wasseraufnahme von weniger als 5 Gew.% und einen elektrischen Durchgangswiderstand von größer als 10¹³ Ω·× cm aufweist.

Als Kunststoffe kommen insbesondere in Frage: POM (Polyoxymethylen), PA 6-3-T (Polyamid 6.3) oder PET (Polyäthylenterephthalat).

Diese Kunststoffe werden vorzugsweise kugelförmig mit einem Durchmesser von mindestens 2 mm eingesetzt, zumal in der Praxis der Durchmesser der Bohrlöcher mindestens 1 mm, vorzugsweise 2 mm größer ist als der Durchmesser der Schwellenschrauben, zumindest in dem Bereich der Schwellenschrauben, der kein Gewinde aufweist.

Die Kunststoffteilchen bzw. die Kunststoffkügelchen werden vorzugsweise in Glasröhrchen abgepackt, die in das Bohrloch eingeführt werden bevor die Schwellenschraube eingedreht wird. Dabei wird das Glasröhrchen zerstört und werden die Kunststoffteilchen von unten nach oben in dem steilen Gewinde hochgedrückt. Dabei werden sie auch in den Bereich hineingedrückt, in dem die Schwellenschraube kein Gewinde mehr aufweist, so dass es zu einem mechanischen Verklemmen der Schwellenschraube im oberen Teil des Bohrloches kommt. Diese mechanische Verklemmung reicht zunächst völlig aus, um die Schiene vorläufig zu fixieren. Der zusätzlich eingesetzte Kleber ist zu diesem Zeitpunkt noch nicht abgebunden, so dass die Schiene justiert werden kann. Hierzu ist es notwendig, die Schwellenschraube entweder etwas zu lockern oder tiefer in das Bohrloch einzudrehen, wobei bei Schwellenschrauben mit einer Spiralfeder am Kopf darauf zu achten ist, dass diese zwar schon etwas zusammengedrückt wird aber keinesfalls völlig zusammengedrückt wird, da sie andernfalls ihre Federfunktion verlieren würde.

Das Einfüllen der Kunststoffteilchen in Glasröhren erleichtert die Handhabung und Dosierung. Es werden weiterhin unerwünschte Verunreinigungen der Kunststoffteilchen vermieden, die gegebenenfalls. zu Veränderungen des Abbindeverhaltens des Klebers führen können. Die aus dem zerstörten Glasröhrchen entstehenden Glassplitter stören weder anfangs noch später.

Beim Abfüllen der Kunststoffteilchen in Glasröhrchen ist darüber hinaus möglich, bereits eine Komponente des Zwei-Komponentenklebers in das Glasröhrchen miteinzuführen, so dass die zweite Komponente des Zwei-Komponentenklebers einfacher in das Bohrloch eingeführt werden kann. Andernfalls müssen die Zwei-Komponentenkleber stets frisch hergestellt und innerhalb einer gewissen Zeitspanne in das Bohrloch eingeführt werden, damit der Zwei-Komponentenkleber nicht vor dem Justieren der Schiene fest abbindet. Da das Abbindeverhalten von Klebern, insbesondere von Zwei-Komponentenklebem relativ stark temperaturabhängig ist, kann es insbesondere bei tiefen Temperaturen zu unerwünschten Verzögerungen der endgültigen Abbindereaktion kommen. Beim erfindungsgemäßen Verfahren ist es möglich, die Abbindezeit des Klebers durch Erwärmen der Kunststoffteilchen und/oder des Klebers und/oder der Schraube zu verkürzen, wobei das Erwärmen von Glasröhrchen oder Schwellenschrauben am einfachsten durchführbar ist. Selbstverständlich ist es aber auch möglich, die herkömmlichen Zwei-Komponentenkartuschensysteme mit Statikmischer vor dem Einsatz zu erwärmen.

Das erfindungsgemäße Verfahren ist vor allem geeignet für Bundschwellenschrauben gemäß deutscher Patentanmeldung 198 02 267, welche am unteren Ende ein Schwellen-schraubengewinde aufweist, mit mittleren Teil zylindrisch oder oval ausgestaltet ist und kein Gewinde aufweist und im oberen Teil der ebenfalls zylindrisch ausgestaltet ist, ein Maschinengewinde aufweist. Die obere Spitze ist als Vielkantknopf oder Vielkantimbus ausgestaltet. Der mittlere Teil ohne Gewinde passt in eine Kunststoffkragenbuchse und ist von einer passenden Spiralfeder umgeben, die mittels einer auf das Maschinengewebe passenden Stopmutter befestigt ist.

Diese Schwellenschraube kann erfindungsgemäß in Betonschwellen oder einer festen Betontrageplatte verankert werden, in dem zunächst ein Bohrloch mit einem Kernbohrgerät gebohrt wird, dessen Durchmesser beispielsweise 2 mm größer ist als der Durchmesser der Schwellenschraube im zylindrischen Mittelteil. In dieses Bohrloch wird ein Glasröhrchen mit POM-Kügelchen mit einer Korngröße von 2 bis 3 mm oder 5 bis 6 mm eingesetzt. Diese Kügelchen sind beispielsweise herstellbar durch Unterwassergranulometrie. Sie weisen alle Bedingungen auf, die gemäß Patentanspruch 1 erforderlich sind. Geeignet sind aber auch entsprechend geformte Kügelchen aus Polyamid 6.3 oder PET.
Um die Risstauglichkeit zu erhöhen, können aber auch Kügelchen mit der Komgröße von 0,5 bis 1 mm eingesetzt werden, da dann der Bohrlochdurchmesser nur geringfügig größer ist als der Schraubendurchmesser. Besonders geeignet sind Kunststoffkügelchen, die als Monokom vorliegen, d.h. eine möglichst enge Korngrößenverteilung aufweisen. Diese wird beispielsweise definiert durch den Parameter n ≥ 9 ermittelt nach DIN 66 145 unter Vernachlässigung von je 1% Über- und Unterkorn. Die Durchschnittsgröße wird somit vorzugsweise im Bereich 1 bis 6 mm gewählt.

Als Kleber kommen in Frage ungesättigte Polyesterharze, die mit Peroxid gehärtet sind, Zwei-Komponenten Epoxidharzsysteme, Acrylate, die mit Peroxid gehärtet werden sowie nichtschäumende Zwei- oder Ein-Komponenten-Polyurethane.

Die Zwei-Komponentenkleber können über herkömmliche Zwei-Komponenten-Kartuschensysteme mit Statikmischer vorgemischt in das Bohrloch dosiert werden.

Sofern das Glasröhrchen bereits außer den Kunststoffkügelchen eine Komponente eines Zwei-Komponentenklebers enthält, ist kein Statikmischer mehr nötig und es entfällt die Topfzeitproblematik. Die zweite Komponente ist ebenfalls leicht zu dosieren und es entsteht kein Abfall.

Die Schwellenschrauben gemäß DE 198 02 267 können nach dem erfindungsgemäßen Verfahren zunächst soweit angezogen werden, dass sie bis 3 kN belastbar sind und somit der Federring komprimiert wird. Nach 1 bis 2 Stunden ist dann durch Abbinden des Klebers die volle Belastbarkeit auf Zug gegeben, die bei 60 kN liegt. Da weder der Kleber noch die Kunststoffteilchen elektrisch leitend sind, ist auch die geforderte Isolierung zwischen Schiene, Schwellenschraube und Betonkörper gewährleistet.

Für das erfindungsgemäße Verfahren besonders geeignet sind Schwellenschrauben, welche bis zum Schraubenschaft mit einem Kunststoff ummantelt sind. Diese Kunststoffe sollten nur eine geringe Oberflächenspannung besitzen und zur Kleberseite hin Antihafteigenschaften aufweisen. Geeignet sind somit beispielsweise, Polyolefine. Derartige Schrauben bleiben sogar nach dem Aushärten des Klebers ausschraubbar.

## Patentansprüche

1. Verfahren zum Verankern von Schrauben mit Durchmessern zwischen 20 und 30 mm, mit steilem Gewinde und einem Schraubenschaft bereich ohne Gewinde in einem Bohrloch mit Hilfe eines Klebers und verspannenden festen Teilchen, **dadurch gekennzeichnet, dass** der Kleber ein Zweikomponentenkleber oder ein nichtschäumender Einkomponentenkleber ist und als verspannende feste Teilchen Kunststoffteilchen verwendet werden, die Teilchengrößen von mindestens 2 mm Durchmesser aufweisen und mindestens zu 90% doppelt so groß wie der durchschnittliche Abstand zwischen Schraubenschaft und Bohrlochwandung, und der Kunststoff eine Kugeldruckhärte (10 sec. Wert) nach DIN 53456 von mindestens 100 N/mm², eine Schlagzähigkeit nach DIN 53453 von mindestens 80 kJ/m² aufweist, eine Warmformbeständigkeit bis mindestens 80°C, eine Wasseraufnahme von weniger als 5 Gew.% und einen elektrischen Durchgangswiderstand von größer als 10¹³ Ω x cm aufweist.

2. Verfahren nach Anspruch 1, **dadurch gekennzeichnet, dass** die Schrauben Schwellenschrauben sind.

3. Verfahren gemäß Anspruch 1 oder 2, **dadurch gekennzeichnet, dass** die Teilchen annähernd kugelförmig sind und einen Durchmesser von mindestens 2 mm aufweisen.

4. Verfahren nach mindestens einem der Ansprüche 1 bis 3, **dadurch gekennzeichnet, dass** der Kunststoff POM, Polyamid 6.3 oder PET ist.

5. Verfahren gemäß einem der Ansprüche 1 bis 4, **dadurch gekennzeichnet, dass** die Teilchen in Glasröhrchen abgepackt in das Bohrloch eingeführt werden.

6. Verfahren gemäß Anspruch 5, **dadurch gekennzeichnet, dass** das Röhrchen mit den Kunststoffteilchen bereits eine Komponente des Zweikomponentenklebers enthält.

7. Verfahren gemäß einem der Ansprüche 1 bis 6, **dadurch gekennzeichnet, dass** die Abbindezeit des Klebers durch Erwärmen der Kunststoffteilchen und/oder des Klebers und/oder der Schrauben verkürzt wird.

8. Verfahren gemäß einem der Ansprüche 1 bis 7, **dadurch gekennzeichnet, dass** es sich um Schwellenschrauben handelt, die im oberen Teil des Schraubenschaftes von einer Spiralfeder umgeben sind.

9. Verfahren gemäß einem der Ansprüche 1 bis 8, **dadurch gekennzeichnet, dass** der Schraubenschaft mit einem Kunststoff ummantelt ist.

10. Mittel zur Durchführung des Verfahrens gemäß einem der Ansprüche 5 bis 9, mit einem Glasröhrchen enthaltend
• feste Kunststoffteilchen mit Teilchengrößen von mindestens 2 mm, einer Kugeldruckhärte (10 sec. Wert) nach DIN 53456 von mindestens 100 N/mm², einer Schlagzähigkeit nach DIN 53453 von mindestens 80 kJ/m², einer Warmformbeständigkeit bis mindestens 80°C, einer Wasseraufnahme von weniger als 5 Gew.% und eines elektrischen Durchgangswiderstandes von größer als 10¹³ Ω x cm und
• eine der zwei Komponenten eines Zweikomponentenklebers.

11. Verwendung von festen Kunststoffteilchen mit Teilchengrößen von mindestens 2 mm, einer Kugeldruckhärte (10 sec. Wert) nach DIN 53456 von mindestens 100 N/mm², einer Schlagzähigkeit nach DIN 53453 von mindestens 80 kJ/m², einer Warmformbeständigkeit bis mindestens 80°C, einer Wasseraufnahme von weniger als 5 Gew.% und eines elektrischen Durchgangswiderstandes von größer als 10¹³ Ω x cm zur Verankerung von Schrauben mit einem Durchmesser zwischen 20 und 30 mm, steilem Gewinde und einem Schraubenschaft bereich ohne Gewinde, in einem Bohrloch mittels eines Klebers und verspannenden festen Teilchen.

## Claims

1. A method for anchoring screws having diameters of between 20 and 30 mm and having a coarse-pitched thread and a barrel portion without a thread in a borehole by means of an adhesive and gripping solid particles, **characterized in that** said adhesive is a two-component adhesive or a non-foaming one-component adhesive, and as said gripping solid particles, there are employed plastic particles which have particle sizes of at least 2 mm diameter, and at least 90% thereof have a size which is double the average distance between the barrel of the screw and the borehole wall, and said plastic has a ball indentation hardness (10 sec value) according to DIN 53456 of at least 100 N/mm², an impact resistance according to DIN 53453 of at least 80 kJ/m², a heat-distortion temperature of at least 80 °C, a water absorptivity of less than 5% by weight, and a volume resistivity of greater than 10¹³ Ω x cm.

2. The method according to claim 1, **characterized in that** said screws are rail screws.

3. The method according to claim 1 or 2, **characterized in that** said particles are essentially spherical and have a diameter of at least 2 mm.

4. The method according to at least one of claims 1 to 3, **characterized in that** said plastic is POM, polyamide 6.3 or PET.

5. The method according to any of claims 1 to 4, **characterized in that** said particles are inserted into the borehole in a condition where they are packed in glass tubes.

6. The method according to claim 5, **characterized in that** said plastic particles contained in said tube already represent one component of said two-component adhesive.

7. The method according to any of claims 1 to 6, **characterized in that** the curing time of the adhesive is shortened by heating the plastic particles and/or the adhesive and/or the screws.

8. The method according to any of claims 1 to 7, **characterized by** being rail screws which are surrounded by a coil spring in the upper portion of the barrel of the screw.

9. The method according to any of claims 1 to 8, **characterized in that** the barrel of the screw is coated with a plastic material.

10. A means for performing the method according to any of claims 5 to 9, comprising a glass tube containing:
• solid plastic particles which have particle sizes of at least 2 mm, a ball indentation hardness (10 sec value) according to DIN 53456 of at least 100 N/mm², an impact resistance according to DIN 53453 of at least 80 kJ/m², a heat-distortion temperature of at least 80 °C, a water absorptivity of less than 5% by weight, and a volume resistivity of greater than 10¹³ Ω x cm; and
• one of the two components of a two-component adhesive.

11. Use of solid plastic particles which have particle sizes of at least 2 mm, a ball indentation hardness (10 sec value) according to DIN 53456 of at least 100 N/mm², an impact resistance according to DIN 53453 of at least 80 kJ/m², a heat-distortion temperature of at least 80 °C, a water absorptivity of less than 5% by weight, and a volume resistivity of greater than 10¹³ Ω x cm for anchoring screws having diameters of between 20 and 30 mm and having a coarse-pitched thread and a barrel portion without a thread in a borehole by means of an adhesive and gripping solid particles.

## Revendications

1. Procédé pour l'ancrage de vis ayant un diamètre compris entre 20 et 30 mm, comportant un filet à pas rapide et une partie de la tige de vis sans filet, dans un trou de forage à l'aide d'une colle et de particules solides déformantes, **caractérisé en ce que** la colle est une colle à deux composants ou une colle à un composant non moussante, et que, à titre de particules solides déformantes, sont utilisées des particules en matière synthétique qui présentent une grosseur de particule d'au moins 2 mm de diamètre et dont 90% au moins ont une grandeur double par rapport à la distance moyenne entre la tige de vis et la paroi du trou de forage, et que la matière synthétique présente une dureté à la pénétration de bille selon DIN 53456 (valeur après 10 sec.) d'au moins 100 N/mm², une résilience selon DIN 53453 d'au moins 80 kJ/m², une résistance à la déformation par la chaleur jusqu'à 80 °C au moins, une absorptivité d'eau de moins de 5% en poids et une résistance électrique intérieure dépassant 10¹³ Ω x cm.

2. Procédé selon la revendication 1, **caractérisé en ce que** les vis sont des tire-fonds.

3. Procédé selon la revendication 1 ou 2, **caractérisé en ce que** les particules sont approximativement sphériques et présentent un diamètre d'au moins 2 mm.

4. Procédé selon au moins une des revendications 1 à 3, **caractérisé en ce que** la matière synthétique est le polyoxyméthylène, le polyamide 6.3 ou le polyéthylène téréphtalate.

5. Procédé selon l'une des revendications 1 à 4, **caractérisé en ce que** les particules sont conditionnées dans des tubes en verre qui sont introduits dans le trou de forage.

6. Procédé selon la revendication 5, **caractérisé en ce que** le tube contenant les particules en matière synthétique contient déjà un composant de la colle à deux composants.

7. Procédé selon l'une des revendications 1 à 6, **caractérisé en ce que** le temps de prise de la colle est raccourci par un chauffage des particules en matière synthétique et/ou de la colle et/ou des vis.

8. Procédé selon l'une des revendications 1 à 7, **caractérisé en ce qu'**il s'agit de tire-fonds dont la partie supérieure de la tige de vis est entourée d'un ressort spiral.

9. Procédé selon l'une des revendications 1 à 8, **caractérisé en ce que** la tige de vis est revêtue d'une matière synthétique.

10. Moyen pour la mise en oeuvre du procédé selon l'une des revendications 5 à 9, comprenant un tube en verre contenant
• des particules solides de matière synthétique présentant une grosseur de particules d'au moins 2 mm, une dureté à la pénétration de bille selon DIN 53456 (valeur après 10 sec.) d'au moins 100 N/mm², une résilience selon DIN 53453 d'au moins 80 kJ/m², une résistance à la déformation par la chaleur jusqu'à 80°C au moins, une absorptivité d'eau de moins de 5% en poids, et une résistance électrique intérieure dépassant 10¹³ Ω x cm, et
• une des deux composants d'une colle à deux composants.

11. Utilisation de particules en matière synthétique solide ayant une grosseur des particules d'au moins 2 mm, une dureté à la pénétration de bille selon DIN 53456 (valeur après 10 sec.) d'au moins 100 N/mm², une résilience selon DIN 53453 d'au moins 80 kJ/m², une résistance à la déformation par la chaleur jusqu'à 80°C au moins, une absorptivité d'eau de moins de 5% en poids et une résistance électrique intérieure dépassant 10¹³ Ω x cm, pour l'ancrage de vis présentant un diamètre compris entre 20 et 30 mm, un filet à pas rapide et une partie de la tige de vis sans filet dans un trou de forage à l'aide d'une colle et des particules solides déformantes.
